# EUROPEAN PATENT SPECIFICATION

(11) **EP 0 662 729 B1**
(45) Date of publication and mention of the grant of the patent: **15.03.2000**
(21) Application number: 94309556.2
(22) Date of filing: 20.12.1994
(51) Int. Cl.: H01M 6/16

(54) **Use of a nonaqueous electrolyte for improved performance and stability**
Verwendung eines nichtwässriger Elektrolyten mit verbesserter Leistung und Stabilität
Utilisation d' un électrolyte non-aqueux à performance et stabilité améliorées

(30) Priority: 20.12.1993 US 169002
(43) Date of publication of application: 12.07.1995
(73) Proprietor: WILSON GREATBATCH LTD., Clarence New York 14031 (US)
(72) Inventor: Thiebolt, William C., Tonawanda, New York 14150 (US); Takeuchi, Esther S., Williamsville, New York 14221 (US); Walsh, Karen M., Marilla, New York 14152 (US)
(74) Representative: Smaggasgale, Gillian Helen

(56) References cited:
- EP-A- 0 237 146
- EP-A- 0 385 724
- US-A- 4 195 122
- PATENT ABSTRACTS OF JAPAN vol. 16, no. 196 (E-1200) 12 May 1992 & JP-A-04 028 171 (SANYO ELECTRIC CO LTD)
- PATENT ABSTRACTS OF JAPAN vol. 14, no. 65 (E-0884) 6 February 1990 & JP-A-01 286 266 (TOSHIBA BATTERY CO LTD)
- PATENT ABSTRACTS OF JAPAN vol. 14, no. 391 (E-0968) 23 August 1990 & JP-A-02 144 860 (MATSUSHITA ELECTRIC IND CO)
- JOURNAL OF THE ELECTROCHEMICAL SOCIETY, vol.139, no.7, 1 July 1992, MANCHESTER, NEW HAMPSHIRE US pages 1849 - 1854, XP354623 NORIO TAKAMI 'THE IMPEDANCE OF LITHIUM ELECTRODES IN LIPF6-BASED ELECTROLYTES'
- PATENT ABSTRACTS OF JAPAN vol. 8, no. 194 (E-264) (1631) 6 September 1984 & JP-A-59 081 870 (HITACHI MAXELL K.K.)
- PATENT ABSTRACTS OF JAPAN vol. 15, no. 183 (E-1065) 10 May 1991 & JP-A-03 043 960 (SANYO ELECTRIC CO LTD)
- PATENT ABSTRACTS OF JAPAN vol. 8, no. 142 (E-254) 3 July 1984 & JP-A-59 051 471 (SANYO DENKI KK)

## Description

### BACKGROUND OF THE INVENTION

### 1. Field of the Invention

The present invention relates to the art of high energy density alkali metal/solid cathode electrochemical cells. More particularly, the present invention relates to a high energy density electrochemical cell having a nonaqueous electrolytic solution suitable for use with an alkali metal anode, and a metal oxide and/or mixed metal oxide cathode. The nonaqueous electrolyte of the present invention comprises at least one ion-forming alkali metal salt of hexafluorophosphate dissolved in an organic solvent. This electrolyte provides benefits to the cell system including increased high energy density, reduced passivation and low reactivity with the alkali metal anode. Passivation undesirably causes voltage delay while alkali metal reactivity is directly related to heat dissipation, and maintaining heat dissipation as low as possible benefits cell performance and cell useful life.

A preferred cell system of the present invention comprises a lithium metal anode, a mixed metal oxide cathode, such as silver vanadium oxide, and a nonaqueous electrolytic solution comprising lithium hexafluorophosphate (LiPF₆) dissolved in a 50/50 solvent mixture (by volume) of dimethoxyethane (DME) and propylene carbonate (PC). The solvent mixture can also comprise DME/ethylene carbonate or PC alone. Further, diglyme, triglyme or tetraglyme can be substituted in the mixtures for DME.

### 2. Prior Art

U.S. Patent No. 4,830,940 to Keister et al., which is assigned to the assignee of the present invention, describes an electrochemical cell including a lithium anode, a solid cathode having as active material silver vanadium oxide and a nonaqueous liquid organic electrolyte comprising the combination of a lithium salt and an organic solvent. Lithium hexafluorophosphate is listed as one of many suitable electrolytes. However, Keister et al. do not address the problem of providing reduced passivation while at the same time reducing electrolyte reactivity with the alkali metal anode to minimize heat dissipation.

US-A-4.195.122 proposes the incorporation of a minor amount of alkali metal hexafluorophosphate into the electrolyte of a high rate battery to improve stability in terms of reducing chemical interactions between the electrolyte and cell components.

It is known that cell voltage delay caused by passivation can be at least partially remedied by providing the electrolytic solution with an additive tailored to counteract passivation. However, improvements in voltage delay are typically gained at the expense of increased heat dissipation, which undesirably detracts from cell performance. The electrolytic solution of the present invention provides a high energy density electrochemical cell having an alkali metal anode such as lithium, and a mixed metal oxide cathode such as silver vanadium oxide with reduced voltage delay as well as improvements in heat dissipation. This is a combination of benefits that is totally unexpected from the prior art.

The present invention is directed to the use of a nonaqueous electrolytic solution wherein the electrolyte salt consists of lithium hexafluorophosphate to reduce voltage delay in an electrochemical cell comprising an alkali metal anode and a solid cathode, said electrolytic solution being operatively associated with the anode and the cathode, and said lithium hexafluorophosphate exhibiting low reactivity with the anode.

Preferably, the metallic anode comprises lithium metal, the solid cathode comprises a mixed metal oxide bronze, such as silver vanadium oxide, and the lithium hexafluorophosphate is dissolved in a solvent preferably comprising a 50/50 mixture (by volume) of dimethoxy- ethane and propylene carbonate.

### IN THE DRAWINGS

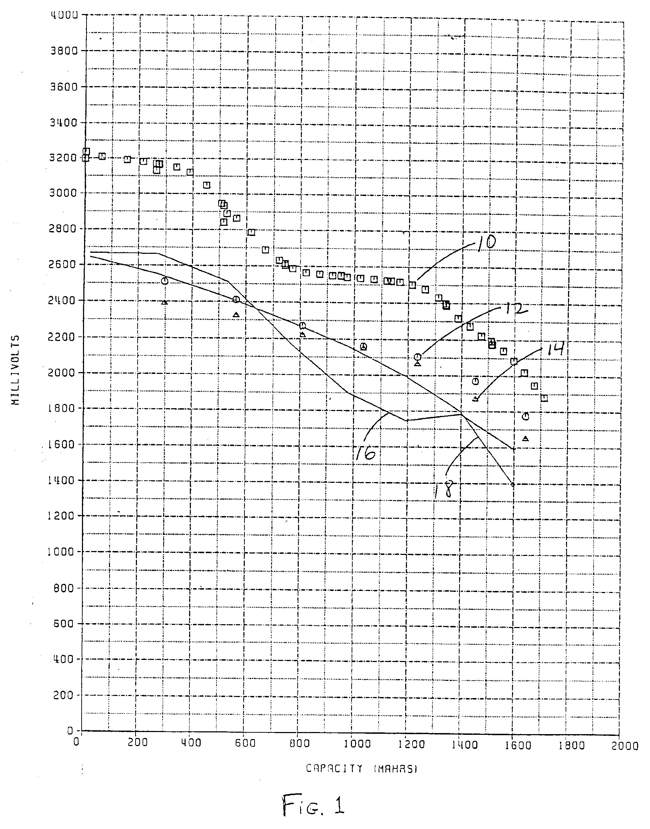

Fig. 1 is a graph showing the average discharge curves of a plurality of lithium/silver vanadium oxide (Li/SVO) electrochemical cells activated by a solution according to the present invention comprising 1M LiPF₆ dissolved in a 50/50 mixture (by volume) of DME/PC and subjected to the one year accelerated discharge data (ADD) regime. Comparative discharge curves are also shown for similarly built Li/SVO prior art cells activated with an electrolyte electrolytic comprising a one molar solution of lithium hexafluoroarsenate (1M LiAsF₆) dissolved in a 50/50 by volume mixture of DME/PC and subjected to the one year ADD regime.

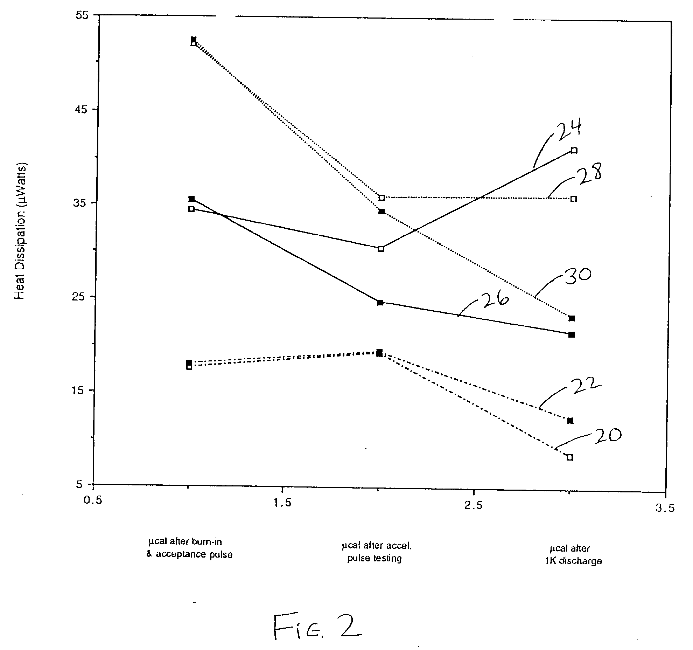

Fig. 2 is a graph showing trends in the amount of heat dissipated by various lithium/silver vanadium oxide cells activated by electrolytic solutions according to the present invention employing lithium hexafluorophosphate salt (LiPF₆) in comparison to electrolyte salts comprising lithium hexafluoroarsenate (LiAsF₆) and lithium perchlorate (LiClO₄).

### DETAILED DESCRIPTION OF THE INVENTION

The cell of the present invention comprises an alkali metal anode. The preferred anode comprises lithium which may be present in the cell in many forms. Preferably the anode is a thin metal sheet or foil of the anode metal, pressed or rolled on a metallic anode current collector to form an anode strip. In the cell of the present invention, the anode strip has an extended tab or lead of the same material as the current collector or integrally formed therewith such as by welding to the current collector and contacted by a weld to a cell case of conductive metal in a case-negative electrical configuration. Alternatively, the anode may be formed of some other geometric shape, such as a bobbin shape, cylinder or pellet to allow an alternate low surface area cell design.

The cell of the present invention further comprises a solid cathode of an electronically conductive composite material which serves as the other electrode of the cell. The solid cathode material may comprise a metal oxide or a mixed metal oxide. The solid cathode exhibits excellent thermal stability and is generally safer and less reactive than a non-solid cathode.

In one aspect thereof, the solid cathode material preferably comprises a mixed metal oxide formed by the chemical addition, reaction or otherwise intimate contact of various metal oxides metal or metal oxide/elemental metal combinations, preferably during thermal treatment, sol-gel formation, chemical vapor deposition or hydrothermal synthesis in mixed states. The materials thereby produced contain metals and oxides of Groups IB, IIB, IIIB, IVB, VB and VIB, VIIB and VIIIB which includes the noble metals and/or their oxide compounds.

In one aspect of the present invention, readily decomposable compounds consisting of metals from Groups IB, IIB, IIIB, IVB, VB, VIB and VIIB as well as similarly decomposable compounds from Group VIIIB are thermally treated so as to effect the rapid preparation of the oxides or the respective metal elements themselves to be utilized further in the preparation of suitable cathode materials. Such readily decomposable materials include, but are not limited to, those classes of compounds known as nitrates, nitrites, carbonates and/or ammonium salts. These precursor materials (i.e. nitrates, nitrites, carbonates, ammonium compounds, etc.) may be decomposed in a combined state or individually decomposed and thereafter combined in an oxide-decomposable metal salt compound and subsequently decomposed to form the cathode composite matrix.

Such composite materials may be pressed into a cathode pellet with the aid of a suitable binder material, preferably a powder fluoro-resin such as polytetrafluoroethylene powder and a material having electronic conductive characteristics, such as carbon black and graphite. In some cases, no binder material or electronic conductor material is required to provide a similarly suitable cathode body. Further, some of the cathode matrix material may be prepared by rolling, spreading or pressing a mixture of the materials mentioned above onto a suitable current collector such as Exmet wire mesh. The prepared cathode bodies may be used as either a solid cathode prepared by directly pressing the material into a cell can assembly or a spirally wound cathode structure similar to a "jellyroll." For a more detailed description of the mixed metal oxide cathode material just described, reference is made to U.S. Pat. No. 4,391,729 to Liang et al.

In still a further aspect thereof, the solid cathode material may comprise a metal oxide. For a detailed description of metal oxides for use as the cathode material in the cell of the present invention, reference is made to U.S. Pat. No. 3,945,848 to Dey et al., which discloses the use of cobalt (III) oxide; U.S. Pat. No. 4,158,722 to Lauch et al., which discloses the use of chromium oxide; and U.S. Pat. No. 3,423,242 to Meyers et al., which discloses the use of vanadium pentoxide.

In both the case of the mixed metal oxide cathode material and the metal oxide cathode material, the cathode is preferably separated from the anode material by a suitable separator to provide physical separation between the anode and the cathode electrodes. The separator is of electrically insulative material to prevent an internal electrical short circuit in the cell between the anode and the cathode electrodes. The separator material also must be chemically unreactive with the materials of the anode and cathode electrodes and both chemically unreactive with and insoluble in the electrolytic solution. In addition, the separator material must have a degree of porosity sufficient to allow flow therethrough of the electrolytic solution during the electrochemical reaction of the cell. Illustrative separator materials include nonwoven glass, polypropylene, polyethylene, glass fiber material, ceramics and materials commercially available under the designations ZITEX (Chemplast Inc.), CELGARD (Celanese Plastic Company Inc.) and DEXIGLAS (C.H. Dexter, Div. Dexter Corp.). The form of the separator typically is a sheet which is placed between the anode and cathode of the cell in a manner preventing physical contact between the anode and cathode, and such contact also is prevented when the combination is rolled or otherwise formed into a cylindrical configuration.

The electrochemical cell of the present invention further includes a nonaqueous, ionically conductive electrolytic solution operatively associated with the anode and the cathode and comprising lithium hexafluorophosphate dissolved in a suitable solvent. The electrolytic solution serves as a medium for migration of ions between the anode and the cathode during the electrochemical reactions of the cell.

The nonaqueous, organic solvents suitable for the invention are chosen so as to exhibit those physical properties necessary for ionic transport (low viscosity, low surface tension, and wettability). The nonagueous solvent of the electrolyte may be any one or more of the organic solvents which are substantially inert to the anode and cathode electrode materials, such as tetrahydrofuran, propylene carbonate, methyl acetate, diglyme, triglyme, tetraglyme, acetonitrile, dimethyl sulfoxide, dimethyl formamide, dimethyl acetamide, 1,2-dimethoxyethane and others. A preferred solvent comprises a 50/50 mixture (by volume) of dimethoxyethane and propylene carbonate (DME/PC).

The assembly of the cell described herein is preferably in the form of a wound element cell. That is, the fabricated cathode, anode and separator are wound together in a "jellyroll" end type configuration or "wound element cell stack" such that the anode is on the outside of the roll to make electrical contact with the cell case. Using suitable top and bottom insulators, the wound cell stack is inserted into a metallic case of a suitable size dimension. The metallic case may comprise materials such as stainless steel, mild steel, nickel-plated mild steel, titanium or aluminum, but not limited thereto, so long as the metallic material is compatible for use with components of the cell.

The cell header preferably comprises a metallic disc-shaped body with a first hole to accommodate a glass to metal seal/terminal pin feedthrough and a hole for electrolyte filling. The glass used is of a corrosion resistant type having from about 0% to about 50% by weight silicon such as CABAL 12, TA 23, FUSITE 425 or FUSITE 435. The positive terminal pin feedthrough preferably comprises molybdenum, titanium, nickel alloy, or stainless steel material. The cell header comprises elements having compatibility with the other components of the electrochemical cell and is for resistance to corrosion. The cathode lead is welded to the positive terminal pin in the glass to metal seal and the header is welded to the case containing the electrode stack. The cell is thereafter filled with the electrolytic solution described hereinabove and hermetically sealed such as by close-welding a stainless steel ball over the fill hole, but not limited thereto. This above assembly describes a case negative cell which is the preferred construction of the cell of the present invention.

The electrochemical cell of the present invention operates in the following manner. When the ionically conductive electrolytic solution of the present invention becomes operatively associated with the anode and the cathode of the cell, an electrical potential difference is developed between terminals operatively connected to the anode and the cathode. The electrochemical reaction at the anode includes oxidation to form metal ions during discharge of the cell. The electrochemical reaction at the cathode involves conversion of ions which migrate from the anode to the cathode into atomic or molecular forms. It is observed that the systems of this invention have a wide operating temperature range, of between about -10°C to about +50°C.

The electrochemical cell according to the present invention is illustrated further by the following Examples, which are given to enable those skilled in the art to more clearly understand and practice the present invention. The Examples should not be considered as a limitation of the scope of the invention, but are described as being illustrative and representative thereof.

### EXAMPLE I

Fourteen experimental cells were built to test the ability of the electrolytic solution of the present invention comprising lithium hexafluorophosphate (LiPF₆) salt, to dissipate heat upon discharge of the cell. In particular, the electrolytic solution comprised 1M LiPF₆ dissolved in a 50/50 mixture (by volume) of dimethoxyethane and propylene carbonate. The electrolytic solution was used to activate a lithium/silver vanadium oxide cell system similar to that previously described and having a 1.8 Ah capacity. Two cells were submitted for short circuit testing, three cells were monitored for open circuit voltage (OCV) and heat dissipation, six cells were subjected to accelerated pulse discharge testing and three cells were discharged under the one year accelerated discharge data (ADD) regime.

The results from the two cells subjected to short circuit testing compared similarly with results from standard electrolyte cells, i.e., Li/SVO cells activated with an electrolyte solution comprising LiAsF₆.

The heat dissipation from the three cells monitored for open circuit voltage testing ranged from about 27.0 µWatts to about 30.0 µWatts at one month of age and continually declined to between about 4.6 µWatts and about 10.2 µWatts at about 14 months of age.

Under accelerated pulse discharge testing, the six cells delivered an average of about 1.34±0.03 Ah to 2 Volts(V), 1.52±0.01 Ah to 1.7V and 1.60±0.01 Ah to 1.5V, respectively. These means are greater than means for Li/SVO cells activated with the LiAsF₆ electrolytic solution, discharged under the same regime.

The average discharge curves for the three cells in this example subjected to the one year accelerated discharge data (ADD) regime are presented in Fig. 1. The discharge curves were recorded by applying pulse trains consisting of four ten second, 1.5 ampere pulses every 15 seconds repeated every 30 minutes to the respective cells wherein in Fig. 1, curve 10 was recorded at open circuit with no load, curve 12 was constructed from the minima of the first pulse of each train and curve 14 was constructed from the minima of the fourth pulse of each train. These curves are presented in comparison to historic data gathered from a plurality of prior art Li/SVO cells activated with an electrolytic solution comprising LiAsF₆ dissolved in a 50/50 mixture (by volume) of DME/PC. In particular, curve 16 was constructed from the minima of the first pulse of each pulse train applied to the plurality of prior art cells and curve 18 was constructed from the fourth pulse minima of each pulse train applied to the prior art cells.

As is evident in Fig. 1, the cells according to the present invention behaved slightly different than the standard Li/SVO cells containing LiAsF₆ electrolyte. The pulse minima from the present cells were slightly lower at beginning of life (BOL), however, note the improvement in delivered capacity particularly in the region between about 800 mAhrs to 1600 mAhrs for the cells of the present invention over the prior art cells. Voltage delay is present for the standard cells with LiAsF₆ during the fourth pulse train, but there is no evidence of voltage delay during the fourth pulse train in the LiPF₆ cells of the present invention. More importantly, the cells made according to the present invention showed no voltage delay during the middle of life pulse trains.

### EXAMPLE II

Fourteen lithium/silver vanadium oxide cells, similar to those cells used in Example I, were built having a 1.8 Ah capacity. Four of the cells in this example were control cells and contained a prior art electrolyte solution comprising lithium hexafluoroarsenate (LiAsF₆) salt. In particular, the electrolytic solution for the four control cells comprised 1M LiAsF₆ salt dissolved in a 50/50 mixture (by volume) of dimethoxyethane and propylene carbonate. The remaining cells in this example contained an electrolytic solution according to the present invention and in particular 1M LiPF₆ dissolved in a 50/50 mixture (by volume) of dimethoxyethane and propylene carbonate. Five of these remaining cells each were subjected to OCV/heat dissipation and accelerated pulse discharge testing.

Five cells in this build having the LiPF₆ electrolytic solution of the present invention were predischarged under a 3.57 kOhm load and one pulse train was applied one week after removal of the load. Table 1 compares the performance of the subject cells to data for the control cells of the same configuration having a standard electrolyte salt comprising lithium hexafluoroarsenate.

**TABLE I**

| | Last load volts | Pre-pulse OCV | P1 min | P4 min |
|---|---|---|---|---|
| LiPF₆mean | 3.187±0.004 | 3.274±0.003 | 2.37±0.075 | 2.579±0.045 |
| Control LiAsF₆ | 3.167 | 3.244 | 2.307 | 2.576 |

As is evident in Table 1, the means exceed the minimum criteria set for all categories.

After having been predischarged under a 3.57 kOhm load, the five cells in this example were monitored for open circuit voltage. This was done to test for heat dissipation which ranged from about 18.5 µWatts to about 23.02 µWatts at one month of age compared to about 43.0 µWatts dissipated by the one control cell having the LiAsF₆ electrolyte solution.

The five cells in this build having the LiPF₆ electrolytic solution of the present invention and subjected to the accelerated pulse discharged testing, delivered an average of about 1.34±01 Ah to 2V, 1.50±0.01 Ah to 1.7V and 1.56±0.01 Ah to 1.5V. The control cells delivered an average of about 1.35 Ah, 1.50 Ah and 1.55 Ah to the respective cutoffs.

From Examples I and II, it can be concluded that lithium/silver vanadium oxide electrochemical cells using LiPF₆ as an electrolyte salt are comparable in performance to production standards set for similar cell systems using LiAsF₆ as an electrolyte salt. In addition, the use of LiPF₆ salt appears to greatly reduce or even eliminate the phenomenon of voltage delay. The cell heat dissipation is also significantly reduced.

### EXAMPLE III

Twelve experimental lithium/silver vanadium oxide cells similar to those described in the previous examples were built to test the lithium/electrolyte salt reactivity of the electrolytic solution of the present invention comprising the lithium hexafluorophosphate salt (LiPF₆) in comparison to electrolyte salts comprising lithium hexafluoroarsenate (LiAsF₆) and lithium perchlorate (LiClO₄). Six of the twelve cells contained a standard amount of anode active material comprising an average of about 0.542 grams (g.) of lithium while the remaining six cells contained 60% of the standard amount of anode active material comprising an average of about 0.327 g. of lithium. Each set of six cells was divided into thirds and filled with a 50/50 mixture (by volume) of PC/DME electrolyte that contained either a 1M concentration of LiAsF₆, LiClO₄ or LiPF₆. The 1M LiAsF₆ PC/DME electrolyte was prepared in-house, the 1M LiCl0₄ PC/DME electrolyte was used "as received" from Tomiyama Pure Chemical Industries, Ltd., and the 1M LiPF₆ PC/DME electrolyte was prepared in-house. The LiClO₄ and LiPF₆ electrolytes contained less than 10 ppm H₂0 by Karl Fischer Titration.

The twelve test cells were then burned-in for 21 hours under a 3.57 kOhm load, and acceptance pulse tested one week after burn-in with one 1.5 Amp pulse train consisting of four 10 second pulses with 15 seconds rest between each pulse. Heat dissipation was recorded after both burn-in and acceptance pulse testing.

The LiPF₆ cells had the highest burn-in voltages and the LiClO₄ cells had the lowest. The standard lithium and 60% lithium cells had comparable burn-in voltages within each electrolyte group. The LiPF₆, LiAsF₆ and LiClO₄ cells had average preload voltages of about 3731±2mV, 3705±4mV and 3602±15mV, respectively. The average last load voltages of the LiPF₆, LiAsF₆ and LiClO₄ cells were about 3218±1mV, 3210±1mV and 3202±1mV, respectively.

Serial number, electrolyte salt type, anode blank weight (g.), pre-load, first load, last load and post load burn-in voltages, and pre-pulse, pulse 1 minimum, pulse 1 end, pulse 4 minimum and pulse 1 end minus pulse 1 minimum acceptance pulse voltages are presented in Table 2.

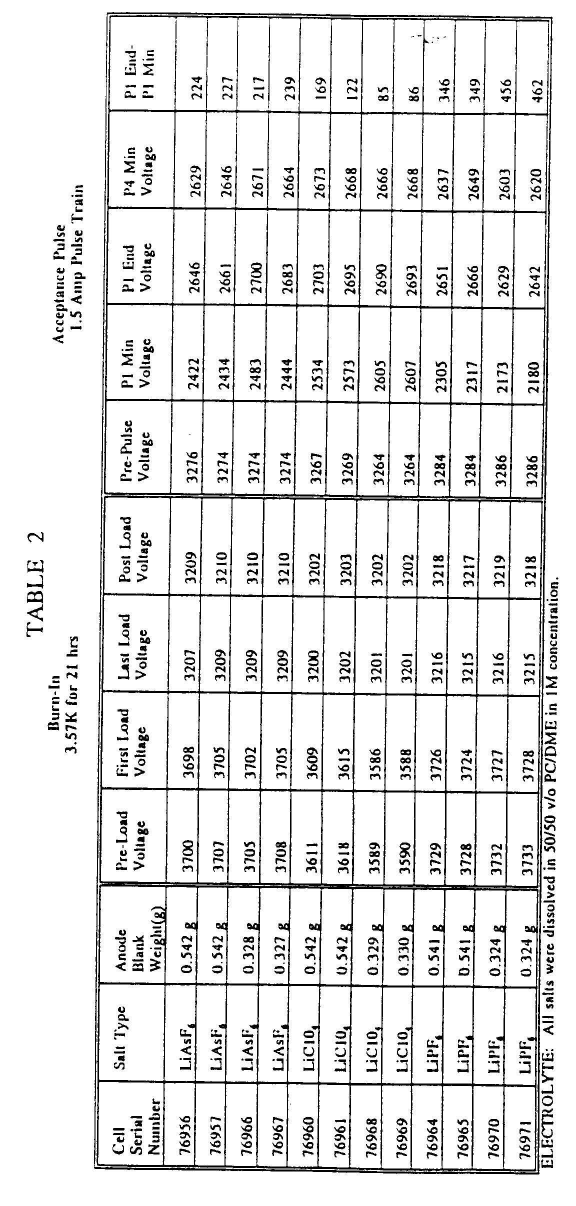

### EXAMPLE IV

After acceptance pulse testing, the six standard lithium cells used in Example III were subjected to accelerated pulse testing. Accelerated pulse testing comprised a plurality of 1.5 Amp pulse trains, in particular 68 to 72 such pulse trains, each train consisting of four 10 second duration pulses with 15 seconds rest between each pulse. This corresponds to between about 1133 mAhrs to 1200 mAhrs of delivered capacity. Heat dissipation was recorded before and after accelerated pulse testing. The six 60% lithium cells used in Example III were also subjected to accelerated pulse testing comprising between 68 to 70 pulse trains similar to those to which the standard lithium cells were subjected, i.e., 1.5 Amp pulse trains, consisting of four 10 second pulses with 15 seconds rest between each pulse. These cells delivered between about 766 mAhrs and 814 mAhrs of capacity to a 1.5V cut-off.

Table 3 shows the serial number, salt type, anode blank weight (g.), heat dissipation (µWatts) after burn-in (B-I) and acceptance pulse testing, the number of pulse trains applied and capacity (mAhrs) delivered to 2.0 Volts(V), 1.7V and 1.5V during accelerated pulse testing, heat dissipation (µWatts) after accelerated pulse testing, the capacity (mAhrs) removed during 1KΩ discharge, heat dissipation (µWatts) after 1KΩ discharge and end of life (EOL) thickness in inches (in.) for each cell tested.

Both the standard and 60% lithium LiAsF₆, LiClO₄ and LiPF₆ cells dissipated an average of about 35.04 µWatts, 52.30 µWatts and 17.87 µWatts respectively, of heat after burn-in and acceptance pulse testing. This results in a statistically significant difference in the heat dissipated between the electrolyte salt groups at a confidence of >99.9%. Additionally, both the standard and 60% lithium LiAsF₆, LiClO₄ and LiPF₆ cells dissipated about 27.63 µWatts, 35.21 µWatts and 19.37 µWatts of heat respectively, after accelerated pulse testing. There thus exists a statistically significant difference in the heat dissipated after accelerated pulse testing between the electrolyte salt groups at a confidence >97.5%. Typically, statistically significant differences are not found to exist between lithium groups within each electrolyte salt set. Thus, the lithium hexafluorophosphate salt clearly exhibits superior heat dissipation characteristics with respect to the other tested electrolyte salts (i.e., low reactivity with the lithium anode) after burn-in and acceptance pulse testing and accelerated pulse testing.

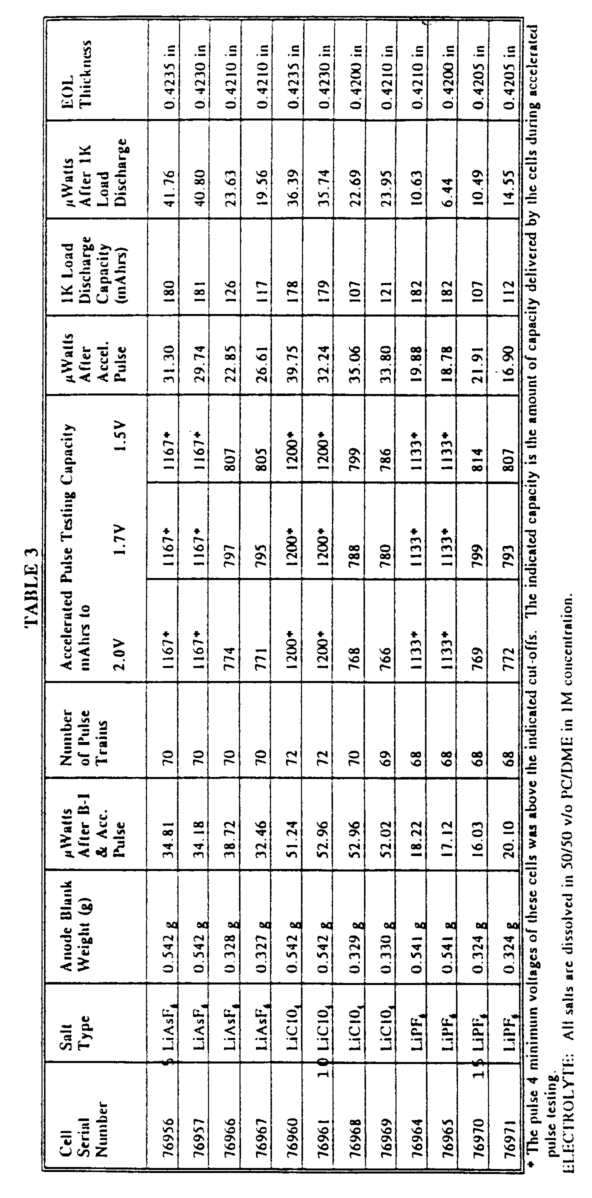

### EXAMPLE V

After undergoing accelerated pulse testing in Example IV, the energy potential of the 60% lithium cells returned to about 2.6V. This high open circuit voltage indicated that not all the lithium was utilized during discharge. In order to determine how much of the heat dissipation was due to lithium/electrolyte reactivity, the 60% lithium cells were then discharged under a 1 kOhm load at 37°C to ∼0 mV, which they reached after about 65 hours on this load. The 60% lithium cells delivered between about 107 mAhrs and 126 mAhrs of capacity.

The standard lithium cells used in Example IV were then discharged for a similar length of time, i.e., 65 hours, under a 1 kOhm load with between about 178 mAhrs to 182 mAhrs of capacity being delivered. Heat dissipation was recorded after 1 kOhm discharge.

As is evident from Table 3, statistically significant separation between standard lithium and 60% lithium cells is evident within the LiAsF₆ and LiClO₄ salt groups. The standard and 60% lithium LiAsF₆ cells dissipated an average of 41.28 µWatts and 21.60 µWatts of heat respectively, while the standard and 60% lithium LiClO₄ cells dissipated an average of 36.07 µWatts and 23.32 µWatts of heat, respectively. Statistically significant differences do not exist between lithium groups within the LiPF₆ electrolyte salt set as the standard and 60% lithium LiPF₆ cells dissipated an average of 8.54 µWatts and 12.52 µWatts of heat, respectively. Collectively, the LiPF₆ cells dissipated an average of about 10.53 µWatts of heat. Statistically significant differences appear to exist in the heat dissipated after 1 kOhm discharge between the standard lithium LiAsF₆ and LiClO₄ cells, the 60% lithium LiAsF₆ and LiClO₄ cells, and both the standard and 60% LiPF₆ cells.

Also noteworthy from Table 3 is the end-of-life (EOL) thicknesses of the various cells. The standard LiPF₆ cells had EOL thicknesses that were less than the EOL thicknesses of the standard lithium LiAsF₆ and LiClO₄ cells but comparable to the 60% lithium LiAsF₆ and LiClO₄ cells. The standard lithium LiAsF₆ and LiClO₄ cells had an average EOL thickness of about 0.4233±0.0003 in. and the 60% lithium LiAsF₆ and LiClO₄ cells had an average EOL thickness of about 0.4205±0.0006 in. The average EOL thickness of the standard and 60% lithium LiPF₆ cells was about 0.4208±0.0003 in.

### CONCLUSION

Fig. 2 illustrates the trends in the amount of heat dissipated by the various experimental cells used in Examples III to V after burn-in and acceptance pulse testing (Example III), accelerated pulse testing (Example IV) and 1 kOhm discharge testing (Example V), as indicated in Table 3. In particular, curve 20 was recorded from the average discharge of the two lithium/silver vanadium oxide cells (Li/SVO) indicated as Serial Nos. 76964 and 76965 and having a standard amount (0.542 grams) of active anode material and an electrolyte comprising LiPF₆ according to the present invention; curve 22 was recorded from the average discharge of the two Li/SVO cells indicated as Serial Nos. 76970 and 76971 and having 60% of the standard amount (0.327 grams) of the active anode material and an electrolyte comprising LiPF₆; curve 24 was recorded from the average discharge of two standard Li/SVO cells indicated as Serial Nos. 76956 and 76957 and having an electrolyte comprising LiAsF₆ according to the prior art; curve 26 was recorded from the average discharge of the two 60% of standard Li/SVO cells indicated as Serial Nos. 76966 and 76967 and having the LiAsF₆ electrolyte; curve 28 was recorded from the average discharge of the two standard Li/SVO cells indicated as Serial Nos. 76960 and 76961 and having an electrolyte comprising LiClO₄ according to the prior art; and curve 30 was recorded from the average discharge of the two 60% of standard Li/SVO cells indicated as Serial Nos. 76968 and 76969 and having the LiClO₄ electrolyte.

From Fig. 2 and Examples III to V it is evident that the LiClO₄ cells dissipated the greatest amount of heat after both burn-in and accelerated pulse testing. Differences were not apparent in the heat dissipation response for the standard lithium and 60% lithium cells filled with LiAsF₆ or the LiClO₄ electrolytic solutions after burn-in and accelerated pulse testing. However, after 1K discharge testing, differences were apparent. The standard lithium cells dissipated more heat than the 60% lithium cells. This indicates that a portion of the heat dissipated by the lithium anode cells containing LiAsF₆ or LiClO₄ can be attributed to lithium/electrolyte reactivity.

The LiPF₆ cells dissipated less heat after each test in Examples III and V than the LiAsF₆ and LiClO₄ cells, regardless of the amount of lithium originally contained in the cells. Additionally, separation between the standard and 60% lithium LiPF₆ cells was not evident after burn-in, accelerated pulse testing or 1K discharge testing. This leads to the conclusion that LiPF₆/lithium reactivity appears to be minimal when compared to other processes within the cell contributing to heat dissipation. Thus, based on the heat dissipation characteristics of the cells studied, the LiAsF₆ and LiClO₄ electrolytes appear to be more reactive toward lithium than LiPF₆.

It is intended that the foregoing description and examples be only representative of the present invention and that the present invention be only limited of the hereinafter appended claims.

## Claims

1. The use of a nonaqueous electrolytic solution wherein the electrolyte salt consists of lithium hexafluorophosphate to reduce voltage delay in an electrochemical cell comprising an alkali metal anode and a solid cathode, said electrolytic solution being operatively associated with the anode and the cathode, and said lithium hexafluorophosphate exhibiting low reactivity with the anode.

2. The use according to Claim 1 wherein the alkali metal anode is formed from lithium, sodium, potassium or an alloy thereof.

3. The use according to Claim 2 wherein the alkali metal anode is a lithium anode.

4. The use according to any one of Claims 1 to 3 wherein the lithium hexaflurophosphate is in solution in at least one organic solvent.

5. The use according to Claim 4 wherein said at least one organic solvent is selected from tetrahydrofuran, propylene carbonate, methyl acetate, acetonitrile, dimethyl sulfoxide, dimethyl formamide, dimethyl acetamide, ethylene carbonate, diglyme, triglyme, tetraglyme and 2-dimethoxy ethane.

6. The use according to Claim 4 wherein the lithium hexafluorophosphate is in solution in an organic solvent comprising dimethoxyethane and propylene carbonate.

7. The use according to Claim 6 wherein the ratio of dimethoxyethane to propylene carbonate is 1:1 by volume.

8. The use according to any one of Claims 1 to 7 wherein the cathode comprises a cathode active material selected from silver vanadium oxide, copper silver vanadium oxide, manganese dioxide, cobalt oxide and nickel oxide.

## Patentansprüche

1. Die Verwendung einer nichtwässrigen Elektrolytlösung, bei der das Elektrolytsalz, zur Erniedrigung der Spannungsverzögerung in einer elektrochemischen Zelle aus Lithiumhexafluorophosphat besteht, umfassend eine Alkalimetall-Anode und eine feste Kathode, wobei die Elektrolytlösung operativ mit der Anode und der Kathode verbunden ist und das Lithiumhexafluorophosphat eine niedrige Reaktivität mit der Anode aufweist.

2. Verwendung nach Anspruch 1, wobei die Alkalimetall-Anode aus Lithium, Natrium, Kalium oder einer ihrer Legierungen gebildet ist.

3. Verwendung nach Anspruch 2, wobei die Alkalimletall-Anode eine Lithiumanode ist.

4. Verwendung nach einem der Ansprüche 1 bis 3, wobei das Lithiumhexafluorophosphat in mindestens einem organischen Lösungsmittel gelöst ist.

5. Verwendung nach Anspruch 4, wobei mindestens ein organisches Lösungsmittel ausgewählt ist aus: Tetrahydrofuran, Propylencarbonat, Methylacetat, Acetonitril, Dimethylsulfoxid, Dimethylformamid, Dimethylacetamid, Ethylencarbonat, Diglyme, Triglyme, Tetraglyme und 2-Dimethoxyethan.

6. Verwendung nach Anspruch 4, wobei das Lithiumhexafluorophosphat in einem organischen Lösungsmittel umfassend Dimethoxyethan und Propylencarbonat gelöst ist.

7. Verwendung nach Anspruch 6, wobei das Volumenverhältnis Dimethoxyethan zu Propylencarbonat 1 : 1 ist.

8. Verwendung nach einem der Ansprüche 1 bis 7, wobei die Kathode ein kathodenaktives Material ist, ausgewählt aus Silbervanadiumoxid, Kupfersilbervanadiumoxid, Mangandioxid, Cobaltoxid und Nickeloxid.

## Revendications

1. Utilisation d'une solution électrolytique non aqueuse dans laquelle le sel d'électrolyte consiste en hexafluorophosphate de lithium pour réduire le retard de tension électrique dans une cellule électrochimique comprenant une anode de métaux alcalins et une cathode solide, la solution électrolytique étant associée de façon opérante avec l'anode et la cathode et l'hexafluorophosphate de lithium présentant une faible réactivité avec l'anode.

2. Utilisation selon la revendication 1, dans laquelle l'anode de métaux alcalins est formée a partir de lithium, de sodium, de potassium ou de leur alliage.

3. Utilisation selon la revendication 2, dans laquelle l'anode des métaux alcalins est une anode de lithium.

4. Utilisation selon l'une quelconque des revendications 1 à 3, dans laquelle l'hexafluorophosphate de lithium est en solution dans au moins un solvant organique.

5. Utilisation selon la revendication 4, dans laquelle au moins un solvant organique est choisi a partir de tétrahydrofurane, de carbonate de propylène, d'acétate de méthyle, d'acétonitrile, de diméthyle sulfoxyde, de diméthyle formamide, de diméthyle acétamide, de carbonate d'éthylène, de diglyme, de triglyme, de tetraglyme et de 2-diméthoxy-éthane.

6. Utilisation selon la revendication 4, dans laquelle l'hexafluorophosphate de lithium est en solution dans un solvant organique comprenant le carbonate de propylène et le diméthoxyéthane.

7. Utilisation selon la revendication 6, dans laquelle le rapport entre le diméthoxyéthane et le carbonate de propylène est de 1 :1 en volume.

8. Utilisation selon l'une quelconque des revendications 1 à 7, dans laquelle la cathode comprend un matériau actif de cathode choisi à partir d'oxyde de vanadium d'argent, d'oxyde de vanadium d'argent cuivre, de dioxyde de manganèse, d'oxyde de cobalt et d'oxyde de nickel.
